# EUROPÄISCHE PATENTSCHRIFT

(11) **EP 1 277 527 B1**
(45) Veröffentlichungstag und Bekanntmachung des Hinweises auf die Patenterteilung: **25.03.2009**
(21) Anmeldenummer: 02015936.4
(22) Anmeldetag: 17.07.2002
(51) Int. Cl.: B09B 3/00, A62D 3/00, C04B 7/24

(54) **Verfahren zur Umwandlung von Asbestzementprodukten in Temperzementprodukte**
Method of converting asbestos-cement products into cement products
Procédé pour transformer des produits en amiante-ciment en produits en ciment

(30) Priorität: 17.07.2001 DE 10133972
(43) Veröffentlichungstag der Anmeldung: 22.01.2003
(73) Patentinhaber: Twee "R" Recycling Groep B.V., 7556 PE Hengelo (NL)
(72) Erfinder:
(74) Vertreter: Metman, Karel Johannes

(56) Entgegenhaltungen:
- EP-A- 0 344 563
- DE-A- 19 517 595
- DE-A- 19 718 606
- MARK H F ET AL: "KIRK-OTHMER ENCYCLOPEDIA OF CHEMICAL TECHNOLOGY" KIRK - OTHMER ENCYCLOPEDIA OF CHEMICAL TECHNOLOGY,3RD EDITION, NEW YORK, WILEY & SONS, US, Bd. 3, 1978, Seiten 267,272-273, XP002031752

## Beschreibung

Die Erfindung betrifft ein Verfahren zur Umwandlung von zu entsorgenden Asbestzementprodukten bzw. asbesthaltigen Abfallprodukten in physiologisch unbedenkliche, asbestfreie Temperzementprodukte, und insbesondere zur stofflichen Weiterverwertung der Temperzementprodukte in asbestfreie Baustoffprodukte.

Asbestfasern wurden bis Anfang der 80er Jahre aufgrund ihrer hervorragenden strukturverfestigenden, isolierenden und feuerfesten Eigenschaften in einer Vielzahl von Produkten verwendet. Mit einem Anteil von über 60 % ging die Hauptmasse der Asbeste dabei in zementgebundene Bauprodukte. Nach den Statistiken der faserverarbeitenden Industrie lag der Höhepunkt des Asbesteinsatzes in den Jahren zwischen 1960 und 1980, obwohl die gesundheitsgefährdende Wirkung der Fasern bereits seit den 20er Jahren bekannt war und die sogenannte Asbestose schon 1940 in Deutschland als Berufskrankheit anerkannt worden war. Durch die intensive Suche nach Ersatzstoffen kam die Verwendung der Asbestfasern in Baustoffen bis zum gesetzlichen Verbot (Asbestverbotsverordnung von 1991) und weiten Bereichen fast vollständig zum Erliegen. So wurden 1989 in der Bundesrepublik Deutschland nur noch weniger als 40.000 t Asbest (davon die Hälfte als Asbestzement) gegenüber 190.000 t im Jahr 1976 verwendet. Auslöser für Krankheiten infolge von Asbestkontaminierung sind insbesondere feine und feinste Fasern, die bei unsachgemäßer Verarbeitung, beim Abrieb, bei Verwitterung oder Alterungszerfall eingebauter Produkte freigesetzt werden können. Um zukünftige Gefährdungen zu vermeiden, ist es erforderlich, asbesthaltige Baustoffe auf Dauer sicher zu entsorgen. Derzeit werden asbesthaltige Abbruchmaterialien weitgehend auf Deponien gebracht. Um derartige Asbestzement-Erzeugnisse als potentiellen Sekundärrohstoff an Naturkreisläufen sich orientierenden Wirtschaftskreisläufen nutzen zu können, soll für die Zementherstellung ein aus Asbestzement mit seiner weitgehend konstanten chemischen Zusammensetzung ein Zwischenprodukt zur Verfügung gestellt werden, das frei von gesundheitsgefährdenden Faserstoffen ist und damit ohne jegliche physiologische und ökologische Belastung als Rohstoff bei der Zementherstellung eingesetzt werden kann.

die Aufgabe wird dadurch gelöst, dass asbestenthaltendes Abfallmaterial in Form des aus dem Wirtschaftskreislauf herausgenommenen Faser-Bindemittel-Kombinationswerkstoffs "Asbestzement" als potentieller Sekundärrohstoff verstanden wird, einem neuen Prozess unterworfen wird, der die Umwandlung der Asbestfasern bedingt, und in der Folge in der Zementindustrie als Bestandteil zur Bereitung der Rohmehlmischung der Klingerproduktion und/oder als Zementzumahlstoff Verwendung finden kann. Mit dem Verfahren gelingt es, eine asbestfreie und mineralisch schwach gebundene Masse zu bilden, die als Sekundärrohstoff weiterverwendet werden kann.

Nach dem Verfahren nach Anspruch 1 ist vorgesehen, dass die Asbestzementprodukte bzw. asbesthaltigen Abfallprodukte, einem Ofen zugeführt werden, und dort bei einer vorbestimmten Temperatur von etwa 600 °C bis etwa maximal 1000 °C und bei einer vorbestimmten Verweilzeit eine Entwässerung der in den Asbestzementprodukten enthaltenen Asbestfasern erfolgt, wobei durch den Wasseraustritt die eigentliche chemische Struktur der Asbestfasern erhalten bleibt, und durch den Wasseraustritt eine pseudomorphe, wasserfreie Faserstruktur entsteht, und daran anschließend nur durch mechanische Zerkleinerung die nach Temperaturbehandlung entstandene wasserfreie Faserstruktur unter Ausbildung des physiologisch unbedenklichen, asbestfreien Temperzementproduktes zerstört wird, wobei das auf diese Weise entstehende asbestfreie Temperzementprodukt eine zementähnliche chemische Zusammensetzung mit dem Charakter eines Sekundärrohstoffes für die Zementindustrie oder für andere technische Anwendungen oder Prozesse besitzt.

Mit dem Verfahren gelingt die stoffliche Verwertung von Asbestzementabfällen nach den Vorlagen des Kreislaufwirtschafts /Abfallgesetzes, und damit Schaffung eines Entsorgungskonzeptes für Asbestzemente, das die vollständige Zerstörung der gesundheitsschädlichen Asbestfasern und die Möglichkeit der weiteren Verwendung der behandelten bzw. gewonnenen Stoffe vorsieht.

Das Verfahren beinhaltet die vollständige Zerstörung der Asbestfasern durch eine mechanische Zerkleinerung, nachdem die Asbestfasern durch eine thermische Behandlung entwässert und auf diese Weise unter Abbau der vorhandenen Kristallstrukturen und allmählicher Ordnung einer neuen, wasserfreien Struktur zugeführt wurde. Dem Verfahren liegt hierbei die Erkenntnis zugrunde, dass die Asbestfasern nach der Temperaturbehandlung bis zu einer maximalen Temperatur von etwa 1000 °C zwar noch eine faserige Struktur mit im wesentlichen unveränderten physikalischen oder chemischen Eigenschaften haben, durch den Wasseraustritt jedoch eine wasserfreie, pseudomorphe Faserstruktur entstanden ist, die mit einem Stabilitätsverlust der Asbestfasern verbunden ist.

Untersuchungen mit einem Raster-Elektronenmikroskop haben ergeben, dass nach der Temperaturbehandlung die Stabilität und Flexibilität der Asbestfaserbündel verloren gegangen ist und dass sich die Fasern spröde verhalten. Es ist zu vermuten, dass sich die einkristallinen Asbestfasern (Chrysothyl oder Hornblende) nach der Temperaturbehandlung bis maximal 1000 °C in polykristalline Aggregate anderer Silikate mit gewissermaßen polymorphen Faserstrukturen umgewandelt haben. Mikroskopische Aufnahmen von temperaturbehandelten und anschließend gemahlenen Materialien zeigen die Entstehung von ausschließlich mehr oder weniger isometrischer Körner, jedoch keine faserförmigen Partikel mehr. Soweit sich nur gelegentlich weitgehend isometrische Bruchstücke von ehemaligen Faserbündeln beobachten lassen, kann darauf geschlossen werden, dass durch entstandene Querbrüche im Fasermaterial eine Sprödigkeit des Fasermaterials erfolgt ist, und man auf der Oberfläche des Materials deutliche Mineralneubildungen erkennen kann.

Jedenfalls haben die Asbestfasern nach dem Temperaturschritt eine äußerst spröde und stabilitätsverlierende Struktur, die durch anschließende mechanische Zerkleinerung einfach zerstört werden kann. Im beispielsweise durch Zermahlung oder dergleichen mechanisch verkleinertem Material finden sich praktisch keinerlei Asbestfaserstrukturen oder Faserbündel mehr. Das nach der Zerkleinerung erhaltene Material ist daher absolut asbestfrei und kann als sogenanntes Temperzementprodukt zur stofflichen Weiterverwertung in asbestfreie Baustoffprodukte verwendet werden.

DE 197 18 606, die als Ausgangspunkt der Stand der Technik für Anspruch 1 gedient hat, bezieht sich auf ein Verfahren zum Umwandeln asbesthaltiger Materialien durch Erhitzen, welche aus einem Anteil an Asbest und einem Calcium enthaltenden Material bestehen, wird als Ausgangsmaterial, inklusive allfälligen Zusätzen, ein asbesthaltiges Material mit einem Asbestanteil unter 50 Gew.-% gewählt wird. Dieses Material wird bei Temperaturen von maximal 1100 DEG C gebrannt, wobei der Asbestanteil zu nichttoxischem, Akermanit-ähnlichem Material unter gleichzeitiger Bildung eines 50 Gew.-% übersteigenden Anteils an Dicalciumsilikat umgewandelt wird.

Es ist die Aufgabe der Erfindung dieses Verfahren weiter zu verbessern.

Erfindungsgemäß wird das Verfahren dadurch gekennzeichnet dass die dem Ofen zugeführten Asbestzementprodukte bzw. asbesthaltigen Abfallprodukte in einer Verpackung vorliegen, und die verpackte Produkte unmittelbar nach Anlieferung bzw. Zwischenlagerung als Stückgut dem Ofen zugeführt werden und die Verpackung bzw. deren Umhüllung während bzw. nach dem Temperaturschritt aufgelöst bzw. zerstört wird.

Eine gesundheitliche Gefährdung durch Freiwerden von Asbestfasern ist dadurch ausgeschlossen.

Verfahrenstechnisch hat sich die thermische Behandlung der stückigen Asbestzementprodukte im Tunnelofen als geeignet erwiesen.

Es ist hierbei nicht unbedingt notwendig, dass das Material zunächst aufgeheizt wird.

Die Temperatur des Tunnelofens wird so eingestellt, dass eine vollständige Entwässerung der Asbestzementprodukte erreicht wird, ohne die Faser selbst zu zerstören. Für eine vollständige Entwässerung haben sich Temperaturen bis maximal etwa 1000 °C, insbesondere Temperaturen von etwa 600 °C bis knapp 1000 °C und einer Verweilzeit von mindestens 30 min bis etwa 150 min als ausreichend erwiesen, um die gewünschte Entwässerung und Umwandlung in die pseudomorphe Faserstruktur herbeizuführen.

Da keine vorhergehende Zerkleinerung vorgesehen ist, kann auf den Einsatz aufwändiger staubdichter Mühlen oder auf die Schaffung eines sogenannten "Schwarzbereichs", in dem freie Asbestfasern auftreten, verzichtet werden.

Das erfindungsgemäße Verfahren eignet sich sowohl für solche Asbestzementprodukte, bei denen die Asbestfasern in fest gebundener Form vorliegen, beispielsweise in einer Zementmatrix eingebundenen Form, als auch für Asbestzementprodukte, bei denen die Asbestfasern in mehr oder weniger freier, ungebundener Form vorliegen, wie etwa beispielsweise bei Spritzasbestprodukten oder anderen asbesthaltigen Isolierstoffen, die freies Asbest enthalten.

Die chemische Zusammensetzung des Endproduktes, die ähnlich der üblichen Zusammensetzung normaler Portlandzemente ist, sowie der Gehalt an hydraulischen Phasen, insbesondere C₂S, ermöglicht eine Verwertung der getemperten Asbestzementprodukte als eigenständiges Bindemittel, als Hauptbestandteil bei der Zementherstellung oder als Rohmehlkomponente zur Klinkerherstellung.

Festigkeitsuntersuchungen an Mörtelmischungen mit gebranntem Asbestzement und Sulfatträger haben gezeigt, dass die hydraulischen Eigenschaften der Rückstände nicht ausreichen, um ein eigenständiges Bindemittel herzustellen. Der Einsatz des getemperten Materials als Zumahlstoff ist hingegen möglich. Durch Vermischen mit Portlandzementklinker und Sulfatträger wurden Zemente mit ähnlich hoher Leistungsfähigkeit wie Portlandzement hergestellt.

Insbesondere die Druckfestigkeitsniveaus der reinen Portlandzemente nach 28 und 90 Tagen konnten bei Zugabe von bis zu 15 Gew.-% gebrannten und anschließend gemahlenen Asbestzements erhalten werden. Die hohen Gehalte an Periklas und Freikalk führen allerdings zu einer Herabsetzung der Raumbeständigkeit.

Erste Untersuchungen haben gezeigt, dass eine ausreichende Raumbeständigkeit erzielt werden kann, wenn das Verhältnis von gebranntem Asbestzement zu Portlandzement deutlich weniger als 15:85 beträgt.

Die Verwendung als Klinkerrohmehl ist grundsätzlich möglich, wenn durch Zugabe weiterer Rohmehlkomponenten der CaO-Gehalt angehoben wird, so dass der Kalkstandard des entsprechenden Klinkers ausreichend hoch ist und gleichzeitig die hohen MgO-Gehalte des gebrannten Asbestzements ausreichend verdünnt werden.

Der Asbestzement wird entsprechend der Anforderungen der Technischen Regeln für Gefahrstoffe - Asbest, Abbruch-, Sanierungs- und Instandhaltungsarbeiten von 1994 in Plattenform geliefert. Dabei wird der Asbestzement entsprechend diesen technischen Regeln in feuchtem Zustand und zudem in Kunststofffolien, sogenannten "big bags" mit Lastkraftwagen verschlossen angeliefert, vorsichtig mit dem Stapler abgeladen und auf dem Betriebsgelände gelagert. Diese Arbeitsweise vermeidet ein Abbrechen und Freisetzen von Asbestfaser bei allen Handlungen, Umladungen etc. dadurch, dass die Asbestplatten nicht abgekippt oder geworfen werden, sondern mittels Gabelstapler gehoben und geladen werden. Demgegenüber erfolgte bei den bisherigen Verfahren die größte Faserfreisetzung beim mechanischen Zertrümmern von Asbestzementprodukten. Eine solche Arbeitsweise ist nach der Erfindung nicht mehr erforderlich.

Mit dem Stapler werden die verpackten Platten auf bereitgestellte Tunnelofenwagen für einen vollautomatischen Transport zum und durch den Tunnelofen gestapelt.

Im Falle einer notwendigen Lagerung wird dafür Sorge getragen, dass die Asbestzementplatten entsprechend der technischen Regeln ständig feucht gehalten und abgedeckt werden. Bei beschichteten Asbestzementprodukten ist eine Oberflächenbehandlung wird Wasser oder Staubbindemitteln nicht erforderlich. Wird mit Wasser genässt, kann dieses wie Regenwasser abgeleitet werden.

Unter Beachtung dieser Sicherheitsvorkehrungen ist ein Freisetzen von Asbestfasern bei der Anlieferung und der gegebenenfalls erforderlichen Lagerung grundsätzlich auszuschließen.

## Patentansprüche

1. Verfahren zur Umwandlung von zu entsorgenden Asbestzementprodukten bzw. asbesthaltigen Abfallprodukten in physiologisch unbedenkliche, asbestfreie Temperzementprodukte, und insbesondere zur stofflichen Weiterverwertung der Temperzementprodukte in asbestfreie Baustoffprödukte, wobei die, Asbestzementprodukte bzw. asbesthaltigen Abfallprodukte einem Ofen zugeführt werden, und dort bei einer vorbestimmten Temperatur von etwa 600 °C bis etwa maximal 1000 °C und bei einer vorbestimmten Verweilzeit eine Entwässerung der in den Asbestzementprodukten enthaltenen Asbestfasern erfolgt, wobei durch den Wasseraustritt die eigentliche chemische Struktur der Asbestfasern im wesentlichen erhalten bleibt, und durch den Wasseraustritt eine pseudomorphe, wasserfreie Faserstruktur entsteht, und daran anschliessend nur durch mechanische Zerkleinerung die nach Temperaturbehandlung entstandene wasserfreie Faserstruktur unter Ausbildung des physiologisch unbedenklichen, asbestfreien Temperzementproduktes zerstört wird, wobei das auf diese Weise entstehende asbestfreie Temperzementprodukt eine zementähnliche chemische Zusammensetzung mit dem Charakter eines Sekundärrohstoffes für die Zementindustrie oder für andere technische Anwendungen oder Prozesse besitzt,
**dadurch gekennzeichnet,**
**dass** die dem Ofen zugeführten Asbestzementprodukte bzw. asbesthaltigen Abfallprodukte in einer Verpackung vorliegen, und die verpackte Produkte unmittelbar nach Anlieferung bzw. Zwischenlagerung als Stückgut dem Ofen zugeführt werden und die Verpackung bzw. deren Umhüllung während bzw. nach dem Temperaturschritt aufgelöst bzw. zerstört wird.

2. Verfahren nach Anspruch 1, **dadurch gekennzeichnet, dass** die Asbestzementprodukte bzw. asbesthaltigen Abfallprodukte einem Tunnelofen zugeführt werden.

3. Verfahren nach Anspruch 1 oder 2, **dadurch gekennzeichnet, dass** die umzuwandelnden Asbestzementprodukte Asbestfasern enthalten können, die einerseits in fest gebundener Form, beispielsweise in einer Zementmatrix eingebundenen Form, oder andererseits auch in mehr oder weniger freier, ungebundener Form, wie etwa beispielsweise bei Spritzasbestprodukten oder anderen asbesthaltigen Isolierstoffen, die freies Asbest enthalten, vorliegen.

## Claims

1. Method for converting asbestos cement products and/or asbestos-containing waste products that are to be disposed of, into physiologically safe, asbestos-free tempered cement products, and in particular for the recycling of materials in tempered cement products into asbestos-free building material products, wherein the asbestos cement products or asbestos-containing waste products are fed into a furnace and there, dehydration of the asbestos fibres contained in the asbestos cement products takes place at a pre-determined temperature of approximately 600°C to a maximum of 1000°C and over a predetermined dwell time, wherein due to the water removal, the actual chemical structure of the asbestos fibres is essentially retained and, due to the water removal, a pseudomorphic water-free fibre structure is produced and subsequently only through mechanical milling, the fibre structure which is water-free following the heat treatment is destroyed, forming the physiologically harmless asbestos-free tempered cement product, wherein the asbestos-free tempered cement product produced by this means has a cement-like chemical composition with the character of a secondary raw material for the cement industry or for other technical applications or processes, **characterised in that** the asbestos cement products or asbestos-containing waste products fed into the furnace are present in a package and the packaged products are fed to the furnace as bulk goods immediately upon delivery and/or intermediate storage, and the package and/or its covering is broken down and/or destroyed during and/or after the heating step.

2. Method according to claim 1, **characterised in that** the asbestos cement products and/or asbestos-containing waste products are fed to a tunnel furnace.

3. Method according to claim 1 or 2, **characterised in that** the asbestos cement products to be converted can contain asbestos fibres which are present in a firmly bound form, for example in a form bound into a cement matrix or, alternatively, in a more or less free, unbound form as, for example, in sprayed asbestos products or other asbestos-containing insulating materials which comprise free asbestos.

## Revendications

1. Procédé pour transformer des produits en amiante-ciment à éliminer et respectivement, des produits résiduaires contenant de l'amiante, en produits en ciment recuits, exempts d'amiante, physiologiquement sans inconvénient, et en particulier pour la valorisation matérielle des produits en ciment recuits en des produits de construction exempts d'amiante, les produits en amiante-ciment et respectivement les produits résiduaires contenant de l'amiante étant amenés dans un four dans lequel on réalise une déshydratation des fibres d'amiante présentes dans les produits en amiante-ciment, à une température déterminée allant d'environ 600°C à au maximum 1000°C et pendant un temps de séjour déterminé, dans lequel, par élimination de l'eau, la structure chimique propre des fibres d'amiante est essentiellement conservée, et dans lequel, par élimination de l'eau, une structure de fibres pseudomorphe, exempte d'eau se forme, et ensuite, par broyage mécanique, la structure des fibres exempte d'eau présente après le traitement thermique est détruite avec formation du produit de ciment recuit exempt d'amiante, physiologiquement sans inconvénient, le produit de ciment recuit exempt d'amiante, formé de cette manière, possède une composition chimique de type ciment avec le caractère d'une matière première secondaire pour l'industrie du ciment ou pour d'autres utilisations ou processus techniques,
**Caractérisé en ce que**
les produits en amiante-ciment ou les produits résiduaires contenant de l'amiante amenés dans le four sont présents dans un emballage, et les produits emballés sont amenés au four directement après livraison ou stockage intermédiaire sous forme de produits divers et l'emballage ou son enveloppe est décomposé ou détruit pendant ou après l'étape en température.

2. Procédé selon la revendication 1, **caractérisé en ce que** les produits en amiante-ciment ou les produits résiduaires contenant de l'amiante sont amenés dans un four tunnel.

3. Procédé selon la revendication 1 ou 2, **caractérisé en ce que** les produits en amiante-ciment à transformer peuvent contenir des fibres d'amiante, qui sont présentes d'une part, sous une forme fortement liée, par exemple sous une forme incorporée dans une matrice en ciment, ou d'autre part, également sous une forme non liée, plus ou moins libre, comme par exemple dans le cas de produits d'amiante à projeter ou d'autres produits isolants contenant de l'amiante, qui contiennent de l'amiante libre.
